# EUROPÄISCHE PATENTSCHRIFT

(11) **EP 2 176 569 B1**
(45) Veröffentlichungstag und Bekanntmachung des Hinweises auf die Patenterteilung: **31.08.2011**
(21) Anmeldenummer: 08786086.2
(22) Anmeldetag: 11.07.2008
(51) Int. Cl.: F16H 59/10

(54) **Sensorvorrichtung**
Sensor device
Dispositif capteur

(30) Priorität: 12.07.2007 DE 102007032545; 21.12.2007 EP 07150371
(43) Veröffentlichungstag der Anmeldung: 21.04.2010
(73) Patentinhaber: ZF Friedrichshafen AG, 88038 Friedrichshafen (DE)
(72) Erfinder: SCHOBER, Thomas, 92256 Hahnbach (DE); DEICHLER, Thomas, 92237 Sulzbach-Rosenberg (DE); GÖTZ, Hans-Ludwig, 92256 Hahnbach (DE)
(86) Internationale Anmeldenummer: PCT/EP2008/059089
(87) Internationale Veröffentlichungsnummer: WO 2009/007449

(56) Entgegenhaltungen:
- EP-A- 1 063 495
- EP-A- 1 342 983
- EP-A- 1 992 845
- WO-A-01/11271
- WO-A-98/03803
- WO-A-99/06846
- WO-A-99/11951
- DE-B3- 10 319 720
- DE-B3-102006 021 078

## Beschreibung

Die Erfindung bezieht sich auf eine Sensorvorrichtung mit einem Winkelsensor. Ein elektronisches Wählhebelmodul zur Erzeugung von Gangschaltsignalen für ein Automatik-Schaltgetriebe eines Kraftfahrzeugs ist aus der Patentschrift DE 103 19 720 B3 bekannt. Die Schrift offenbart im Prinzip eine Leiterplatte mit zwei Gruppen von Sensoren und mit einem Mechanismus, der die Bewegungen des Gangwahlhebels auf die Sensoren überträgt.

In der bekannten Kulissenschalteinheit befindet sich die Sensorik seitlich versetzt relativ zur Schaltgasse des Gangwahlhebels, wobei die Leiterplatte insbesondere parallel zur Ebene der Schaltgasse angeordnet ist. Dieses elektronische Wählhebelmodul arbeitet sehr zuverlässig und seine Baugröße ist für die meisten Anwendungen geeignet. Es gibt jedoch Anwendungen, in denen der vorhandene Einbauraum nicht ausreichen würde.

Ein elektronisches Wählhebelmodul ist in der Patentschrift DE 10 2006 021 078 B beschrieben. In dieser Schrift ist für ein elektronisches Wählhebelmodul die Aufgabe gelöst, unter Beibehaltung der elektrotechnischen Zuverlässigkeit mit einem geringeren Einbauraum auszukommen, so dass das Modul für verschiedene Fahrzeuggrößen geeignet ist. Bei dieser Lösung wird die Leiterplatte nicht mehr seitlich und parallel zur Schaltgasse angeordnet, sondern in Querausrichtung vor die Schaltgasse gelegt, so dass die Bewegung in der Schaltgasse D, N, R, P des Gangwahlhebels auf die Sensorseite der Leiterplatte zu gerichtet ist. Diese Ausrichtung bedingt eine Neukonstruktion des Mechanismus, der den Gangwahlhebel mit den Sensorbetätigungsgliedern im Bereich der Leiterplatte verbindet.

An der Eingangsseite und an der Ausgangsseite des Mechanismus, d. h. bei den Bewegungen, die am Gangwahlhebel eingegeben werden und die an der Leiterplatte ausgegeben werden, bleibt es erfindungsgemäß bei einem Prinzip, dass sich in den Modulen gemäß DE 103 19 720 B3 und DE 10 2006 021 078 B bewährt hat. Die übliche Schwenkung des Gangwahlhebels in der hauptsächlichen Schaltgasse P, R, N, D wird in eine Rotationsbewegung für einen Winkelsensor umgewandelt. Der Winkelsensor ist auf der Leiterplatte angeordnet und wird durch einen Rotor- vorzugsweise berührungslos - betätigt.

Eine quer zu der Richtung der Schaltgasse erfolgende Bewegung des Gangwahlhebels kann je nach Schaltkulisse eine Tippbewegung zur manuellen Gangwahl sein oder kann bei einer anderen Schaltkulisse einen Gassenwechsel in eine zweite Schaltgasse bedeuten. In der DE 10 2006 021 078 B wurde diese Querbewegung geradlinig für einen weiteren Sensor umgesetzt, der als Wegsensor ebenfalls auf der Leiterplatte angeordnet war. An dieser Stelle hat sich eine Verbesserung des Mechanismus gemäß DE 10 2006 021 078 B als notwendig erwiesen. Bei dem bisherigen Verfahren ergab sich ein Problem bei der Erkennung von Brüchen. Die Bewegung des Gangwahlhebels wird durch einen Bügel mit Kugelfortsatz auf den erfindungsgemäßen Mechanismus übertragen. Wenn dieser Bügel bricht, sei es durch Überbeanspruchung oder sei es durch Missbrauch, so konnte dieser Fehler bisher nicht detektiert werden.

Als Problem hat sich auch die Führung des Weiteren, zusätzlich zum Winkelsensor-Bedämpfungselement vorgesehenen Bedämpfungselements herausgestellt. Bei der Umsetzung dieser quer zur Richtung der Schaltgasse erfolgenden Bewegung des Gangwahlhebels konnte es vorkommen, dass durch eine Überdrückung oder einen Missbrauch die Auswertung durch die Sensorik ungenau wurde.

Schließlich sollen auch Toleranzen, die in der Bewegungsbahn des Bügels mit Kugelfortsatz gemäss DE 10 2006 021 078 B liegen, mechanisch kompensiert werden und keine Ungenauigkeiten in der Auswertung verursachen.

Schließlich soll auch die Führung des Rotors relativ zu dem Winkelsensor mit möglichst wenigen Bauteilen und mit möglichst geringen Abstandstoleranzen gewährleistet sein. Eine Sensorvorrichtung mit den Merkmalen des Oberbegriffs des Anspruchs 1 ist aus der Patentschrift DE 10 2006 021 078 B bekannt. Die Erfindung hat sich deshalb positiv die Aufgabe gestellt, bei einer Sensorvorrichtung eine präzise Führung des Rotors zu schaffen.

Die Lösung erfolgt durch eine sensorvorrichtung nach dem Anspruch 1. Eine zweckmässige Weiterbildung ist in dem Unteranspruch 2 enthalten.

Ein wichtiges Erfindungsmerkmal ist eine präzise Führung des Rotors, der gabelförmig eine auf der Leiterplatte befestigte Rotorführung einfasst.

Die Erfindung wird anhand der Patentzeichnung weiter erläutert. Es zeigt:
- Fig. 1: ein Gehäuse mit einer Schaltkulisse, in der ein Gangwahlhebel gelagert ist, der seine Bewegung auf ein Wählhebelmodul überträgt;
- Fig. 2: eine perspektivische Explosivdarstellung des Wählhebelmoduls;
- Fig. 3a: eine Aufsicht auf das Wählhebelmodul, wobei die Rotorstellung einer Stellung D des Gangwahlhebels entspricht;
- Fig. 3b: Aufsicht wie in Figur 3a, wobei jedoch die Rotorstellung einer Stellung P des Gangwahlhebels entspricht;
- Fig. 3c: eine perspektivische Darstellung des Wählhebelmoduls mit Rotor und Tipphebel, wobei die Position des Ankopplungspunkts einer Stellung "Auslenkung bei Bruch" des Gangwahlhebels entspricht;
- Fig. 4: eine Darstellung der Leiterplatte des Wählhebelmoduls, aus der eine mögliche Anordnung der Spulen der Winkelsensoren ersichtlich ist;
- Fig.5a: eine Aufsicht auf ein weiteres Beispel eines Wählhebelmoduls, wobei die Rotorstellung einer Schaltposition S des Gangwahlhebels entspricht;
- Fig. 5b: eine Aufsicht wie in Fig. 5a, wobei jedoch die Rotorstellung einer Schaltposition D des Gangwahlhebels entspricht;
- Fig. 5c: eine Aufsicht wie in Fig. 5a und 5b, wobei jedoch die Rotorstellung einer Schaltposition P des Gangwahlhebels entspricht;
- Fig. 6: eine Aufsicht wie in Fig. 5b (Schaltposition D), wobei jedoch durch den Schaltgassenwechsel die Querbewegung auf den Tipphebel übertragen wurde und in der zweiten Schaltgasse die Tippbewegung M+ ausgeführt wird;
- Fig. 7: eine Aufsicht wie in Fig. 5b (Schaltposition D), wobei jedoch durch einen Gassenwechsel die Querbewegung auf den Tipphebel übertragen wurde und in der zweiten Schaltgasse eine Tippbewegung M- ausgeführt wird;
- Fig. 8: eine perspektivische, auseinander gezogene Ansicht des Wählhebelmoduls mit einem Federsystem und mit der Leiterplatte;
- Fig. 9: eine perspektivische, auseinander gezogene Ansicht des Wählhebelmoduls mit dem Federsystem von Fig. 8, aber ohne Leiterplatte.
- Fig.10a: eine perspektivische, auseinandergezogene Ansicht einer Sensorvorrichtung mit einem Winkelsensor, mit Blick auf die Sensorseite der Leiterplatte;
- Fig.10b: Sensorvorrichtung wie in Fig. 10a, jedoch mit Blick auf die Unterseite der Leiterplatte;
- Fig.11 a: Sensorvorrichtung, gemäß Fig. 10a mit Blick auf die Sensorseite, jedoch in zusammengebautem Zustand;

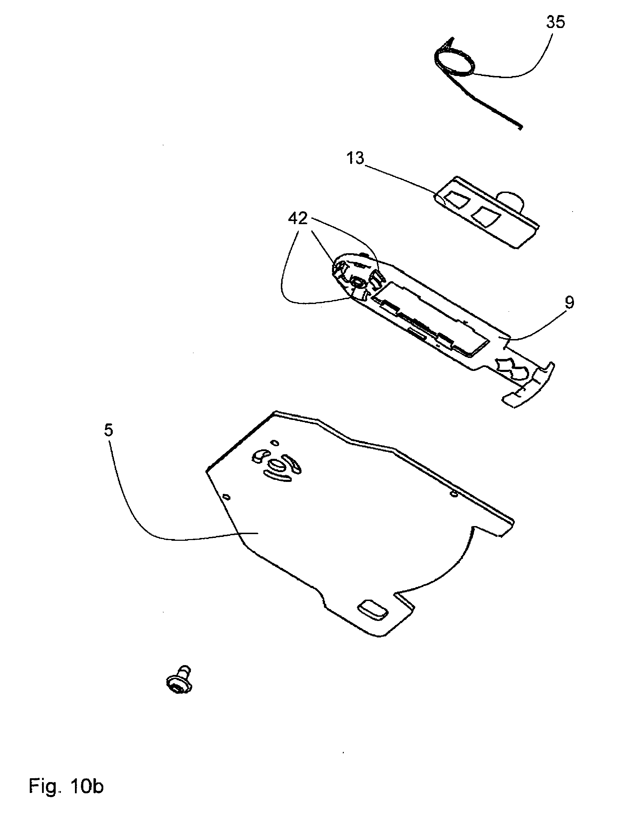

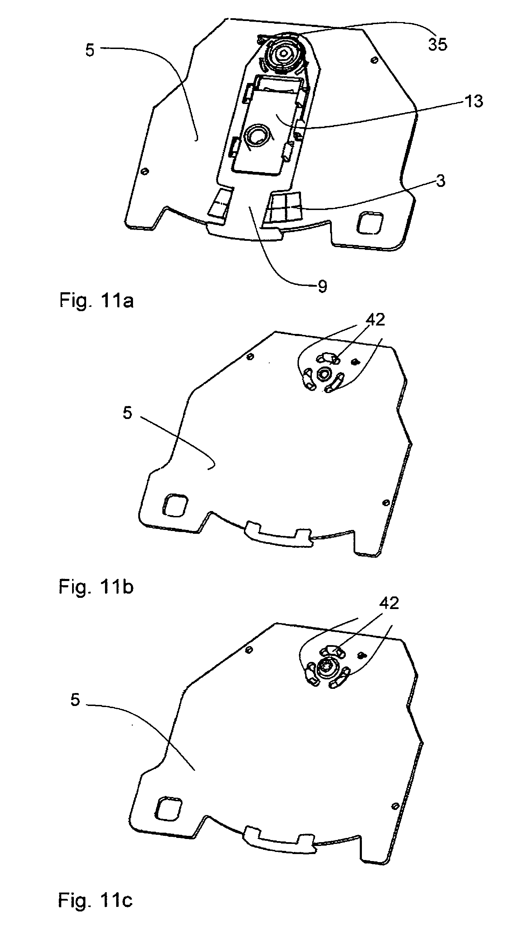

- Fig.11 b: Sensorvorrichtung gemäß Fig.10b mit Blick auf die Unterseite, jedoch ohne Angstschraube;
- Fig.11c: Sensorvorrichtung gemäß Fig.10b mit Blick auf die Unterseite, in zusammengebautem Zustand;

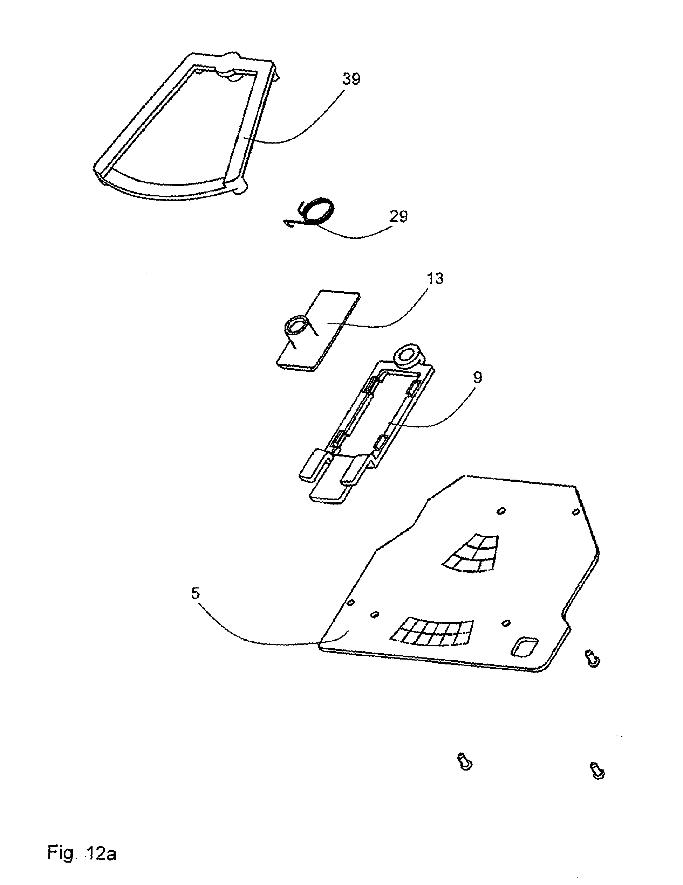

- Fig.12a: eine perspektivische, auseinandergezogene Ansicht eines Ausführungsbeispiels einer erfindungsgemäßen Sensorvorrichtung , mit Blick auf die Sensorseite der Leiterplatte;

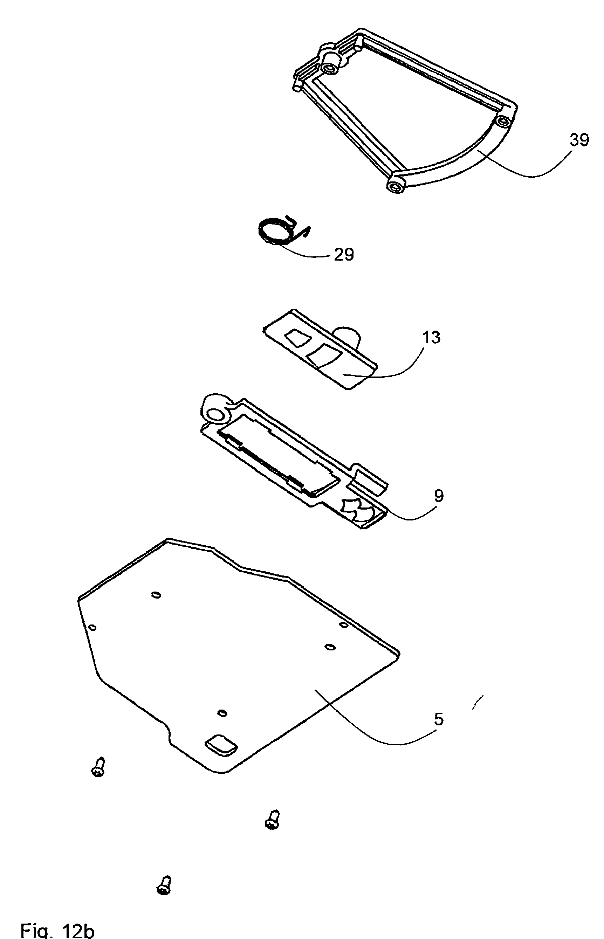

- Fig.12b: erfindungsgemäße Sensorvorrichtung wie in Fig. 12a, jedoch mit Blick auf die Unterseite der Leiterplatte;

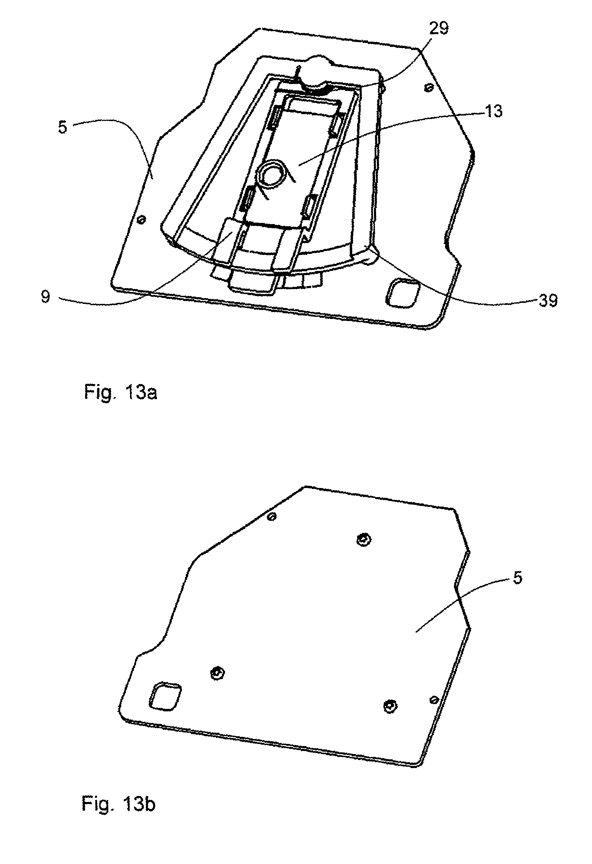

- Fig.13a: erfindungsgemäße Sensorvorrichtung wie Fig. 12a mit Blick auf die Sensorseite in zusammengebautem Zustand;
- Fig.13b: erfindungsgemäe Sensorvorrichtung wie in Fig. 12b mit Blick auf die Unterseite, jedoch in zusammengebautem Zustand.

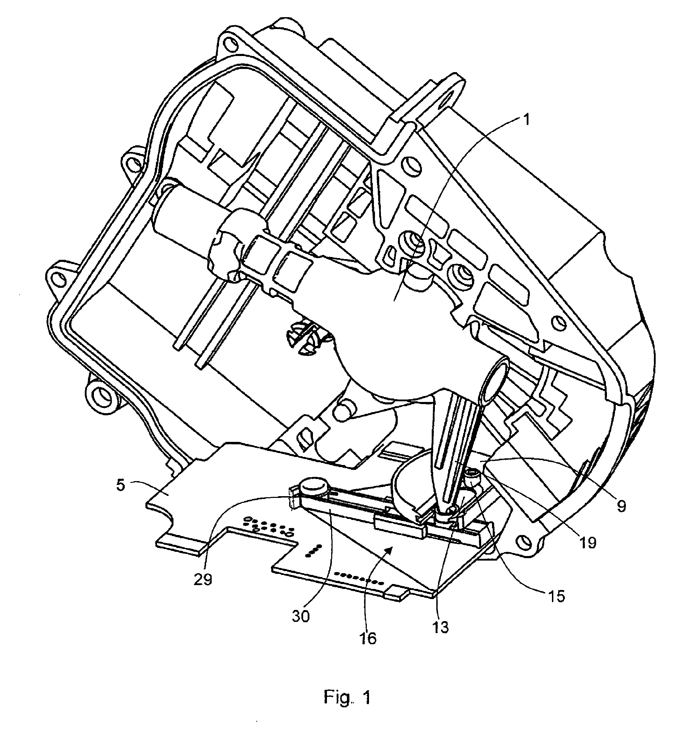

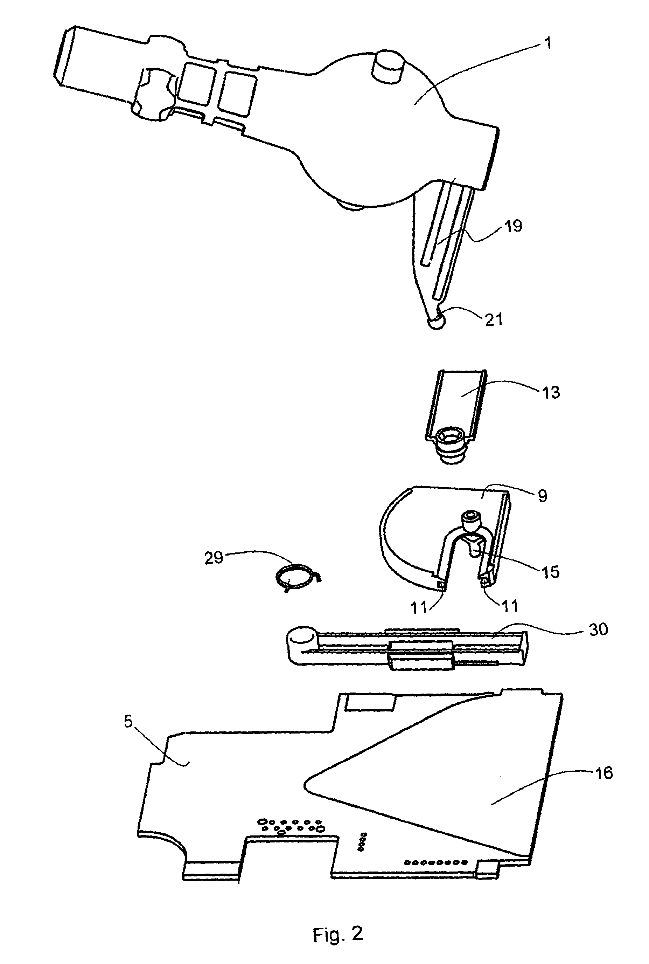

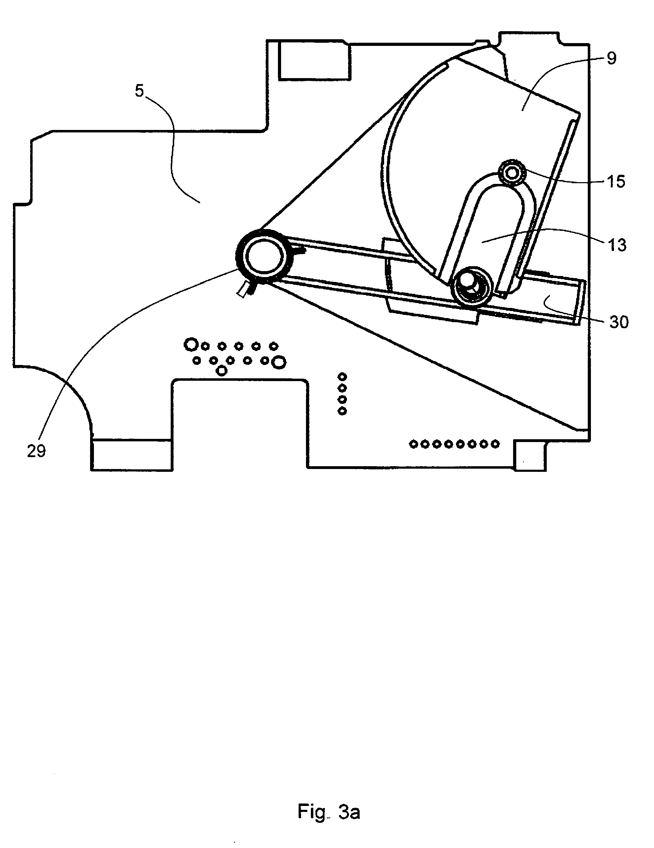

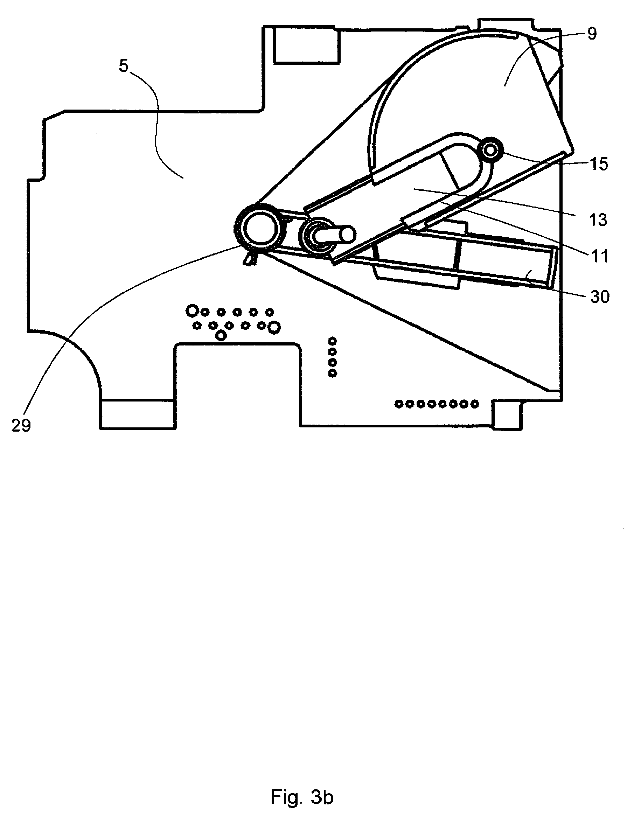

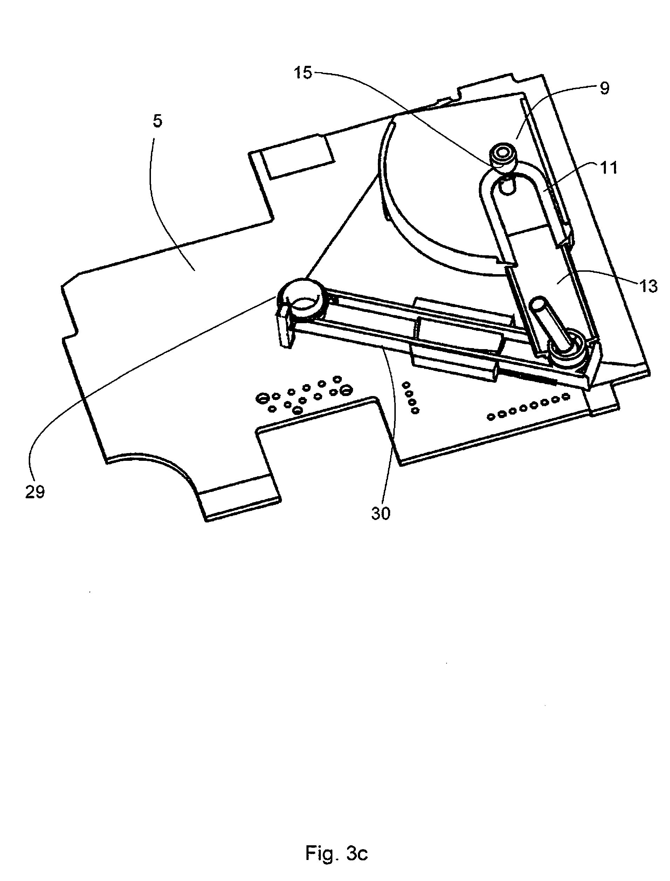

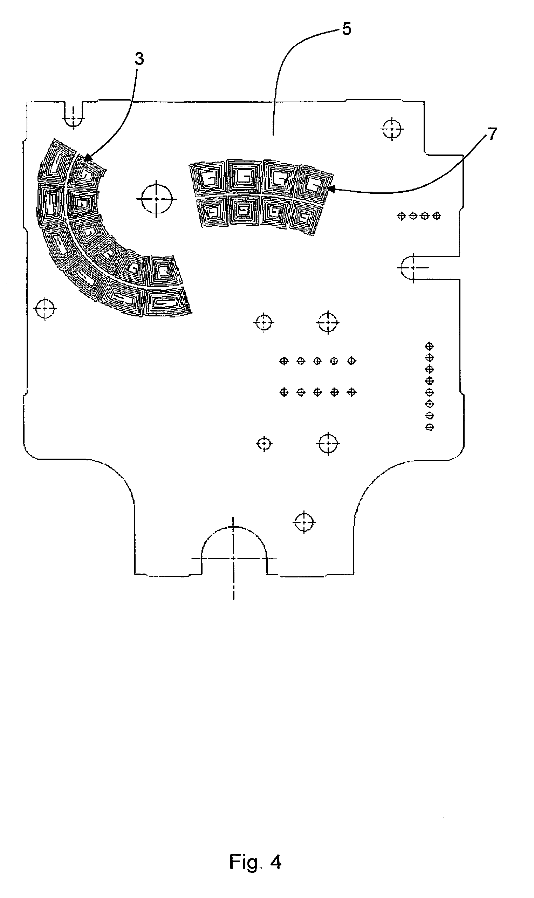

Die folgende Tabelle zeigt drei Ausführungsbeispiele für ein Layout der Schaltkulisse. Die Umsetzungen dieser Bewegungen im Wählhebelmodul sind in den Figuren 1 bis 4 erkennbar.

| Layout 1 | Layout 2, Linkslenker | Layout 3, Rechtslenker |
|---|---|---|
| 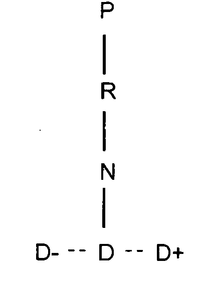 | 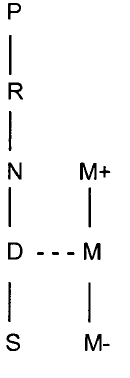 | 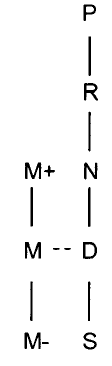 |

Dabei beschreibt Layout 1 eine einfache Schaltkulisse mit den üblichen Positionen P, R, N und D in einer Schaltgasse sowie eine Quer-Bewegung, die von der Automatik-Fahrstellung D aus eine manuelle Gangwahl in Form der bekannten TIPTRONIC® zu den Schaltstellungen D+ und D- erlaubt. In der Schaltgasse werden die Positionen P, R, N und D durchlaufen und anschließend im Wählhebelmodul durch einen Rotor 9 detektiert; die Querbewegung nach D+ oder D- wird durch einen drehbar gelagerten Tipphebel 30 detektiert.

Bei den Layouts 2 und 3 für Linkslenker bzw. Rechtslenker ist die Sensorfunktion wie folgt:
- •: In der Hauptschaltgasse bewegt sich der Tipphebel 30 nicht; die Positionen P, R, N, D und S werden durch den Rotor 9 detektiert.
- •: Ein Gassenwechsel von D nach M wird durch den Tipphebel 30 detektiert und mit Hilfe eines in Schienen 11 geführten Schiebers 13 am Rotor 9 ausgeglichen.
- •: In der Tippgasse M+ und M-, die bei diesen Layouts 2 und 3 parallel zur Gangschalt- gasse liegt, wird wieder der Rotor 9 aktiv; diesmal allerdings wegen des Gassenwech- sels mit einem verlängerten oder verkürzten Schieber 13.

Für alle Layouts gilt als zusätzliche Fehlerfunktion:
- •: Wenn der Tipphebel 30 am Ankopplungspunkt freigegeben wird, bspw. durch einen Bruch des Bügels 19 , so drückt eine Drehfeder 29 den Tipphebel 30 in eine extreme Seitenposition. In dieser Position findet eine Fehlerdetektion durch den weiteren Sensor 7 statt, d. h. der Tipphebel 30 erzeugt ein Sondersignal auf einem gesonderten Spulen- sensor oder auch kein Signal, jedenfalls kein Signal auf den normalen Gassenwechsel- oder Gluersensoren.
- •: Auch der Rotor 9 wird von einer vorgespannten Schenkelfeder 35 gehalten. Somit kann auch hier garantiert werden, dass der Rotor 9 bei einem Materialbruch aus dem Akti- onsbereich geschoben wird.

Die Spulen beider Winkelsensoren 3 und 7 sind redundant, d. h. ein-Fehler-korrigierend und zwei-Fehler-erkennend in mindestens zwei Bögen angeordnet. Über den kreisförmig angeordneten Spulen befindet sich jeweils ein berührungslos wirkender Bedämpfungsrotor 9 bzw. 30. Der Bedämpfungsrotor 9 für die Detektion der Schaltstellungen P, R, N, D, S steht über Schienen 11 in direkter Verbindung mit dem Schieber 13 , dessen Hülse andererseits auch in einer Aussparung des Tipphebels 30 geführt wird.

Dank des Tipphebels 30 können vorhandene Überdrückungen und Missbräuche, die durch den Fahrzeuglenker verursacht werden, oder auch mechanische Einflüsse, die durch Toleranzen oder durch das Fahren auf unebenen Wegen verursacht werden, ausgeglichen werden. Durch den neuen Tipphebel 30 erhält man konstante, ungestörte Signale, die das Auswerten durch die Sensorik erleichtern.

Auf der Unterseite des Tipphebels 30 befindet sich, im Bereich des Gassenwechselfeldes mit dem weiteren Winkelsensor 7 , ein weiteres Bedämpfungselement zum Bedämpfen der Spulen des weiteren Winkelsensors 7. Diese Spulen dienen zum Detektieren des Gassenwechsels. Nach dem Gassenwechsel wird erneut der Schieber 13 des ersten Rotors 9 entlang seiner Führung im Tipphebel 30 bewegt.

Das Tippen M+, M- wird bei diesem Layout 2 oder Layout 3 der Schaltkulisse nun durch den ersten Rotor 9 detektiert.

Um einen Bruch des Mitnehmers (Bügel 19 des Gangwahlhebels 1 mit Kugelfortsatz 21) erkennen zu können, wird im Drehlager des Tipphebels 30 eine vorgespannte Feder 29 eingesetzt. Sollte nun der Mitnehmer 19 , 21 brechen, was normalerweise dazu führen würde, dass sich der Tipphebel 30 in seiner Grundposition hält, entspannt sich die Feder und schiebt den Tipphebel 30 aus dem normalen Bedämpfungsbereich des weiteren Winkelsensors 7 heraus. Ausserhalb des normalen Funktionsbereichs kann nun entweder eine Extra-Spule angebracht sein, die einen Bruch detektiert, oder es kann auch mittels eines fehlenden oder falschen Normalsignals festgestellt werden, dass jener Materialbruch vorliegt.

Die in dem Stand der Technik DE 10 2006 021 078 B verwendete Hülse ist bei der Konstruktion gem. den Abbildungen 1 - 4 so in den Schieber 13 integriert, dass sie in dem oben beschriebenen Tipphebel 30 geführt werden kann. Bei der erfindungsgemässen Vorrichtung wird der Tipphebel 30 gleichzeitig als Abstandshalter zur Leiterplatte 5 verwendet. Dort, wo der mechanische Koppelpunkt gegen die tragende Leiterplatte 5 gedrückt wird, sind (in der Patentzeichnung nicht dargestellte) Gleitbahnen aufgebracht.

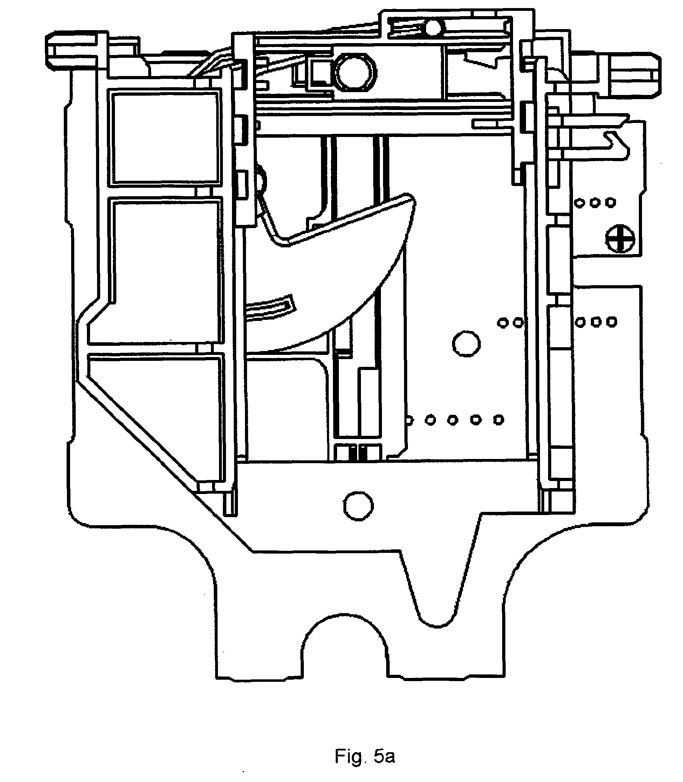

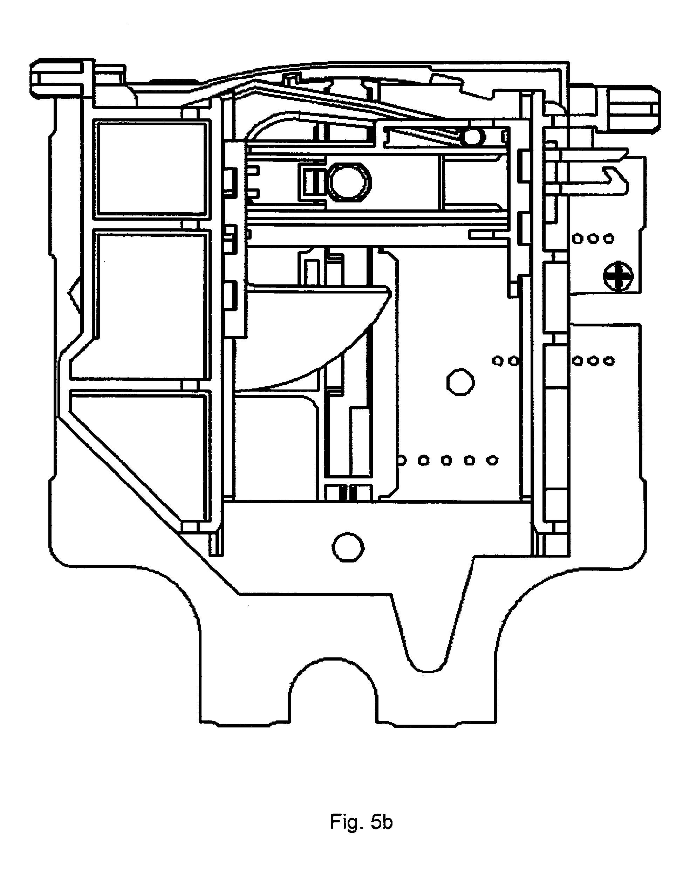

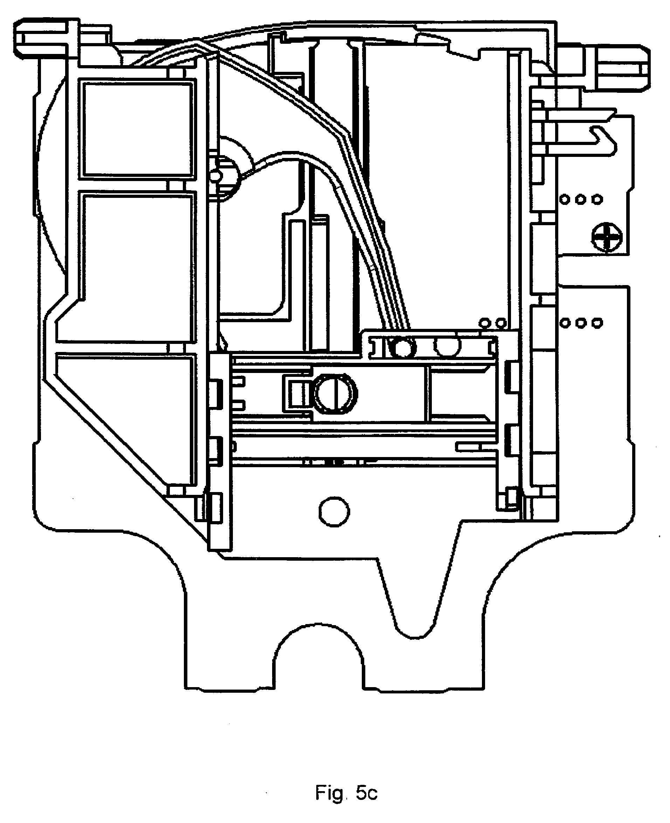

In den Fig. 5a, 5b und 5c ist ein weiteres Beispiel eines Wählhebelmoduls in den drei Schaltpositionen S, D und P des Gangwahlhebels 1 dargestellt. Die Schienen für den Schieber 13 sind im Unterschied zu dem zuvor besprochenen Ausführungsbeispiel nicht mehr direkt in den Rotor 9 integriert. Vielmehr sind die Schienen aus dem Rotor 9 entfernt und separat mittels einer ortsfesten Hilfsvorrichtung in dem Wählhebelmodul angebracht.

Dieses Beispiel ist zum größten Teil identisch mit dem zuvor beschriebenen Aufbau, jedoch kommen als neue Bauteile ein Längsschieber, die Hilfsvorrichtung mit Schienen und ein Verlängerungsarm des Rotors 9 hinzu. Der Längsschieber sitzt beweglich, d. h. verschiebbar zwischen den Schienen der ortsfesten Hilfsvorrichtung. Der Längsschieber nimmt nunmehr die Längsbewegungen des Gangwahlhebels 1 in der Schaltgasse auf. Die Hilfsvorrichtung befindet sich oberhalb des Gesamtaufbaus.

Der Schieber 13 wird innerhalb des Längsschiebers geführt. Gleichzeitig wird der Verlängerungsarm des Rotors mit dem Längsschieber in Verbindung gebracht, um sicher zu stellen, dass der Rotor bei den beabsichtigten Längsbewegungen des Gangwahlhebels in der Schaltgasse immer mitbewegt wird. Sensorspulen, Bedämpfungselemente und Sicherheitsfeder sind genauso ausgeführt wie bei dem oben entwickelten Ausführungsbeispiel.

Durch die Führung des Schiebers 13 innerhalb des nur in eine Richtung verfahrbaren Längsschiebers und durch das Mitführen des Rotors mit Hilfe des Verlängerungsarms kann der Rotor bei einem Missbrauch nicht mehr mitbewegt werden; man erhält so immer ein eindeutiges Signal.

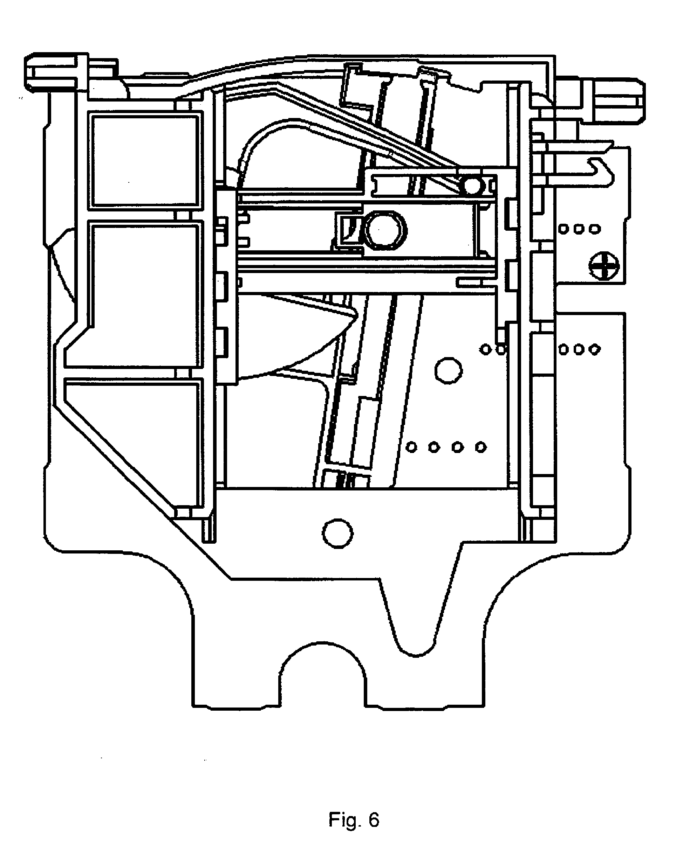

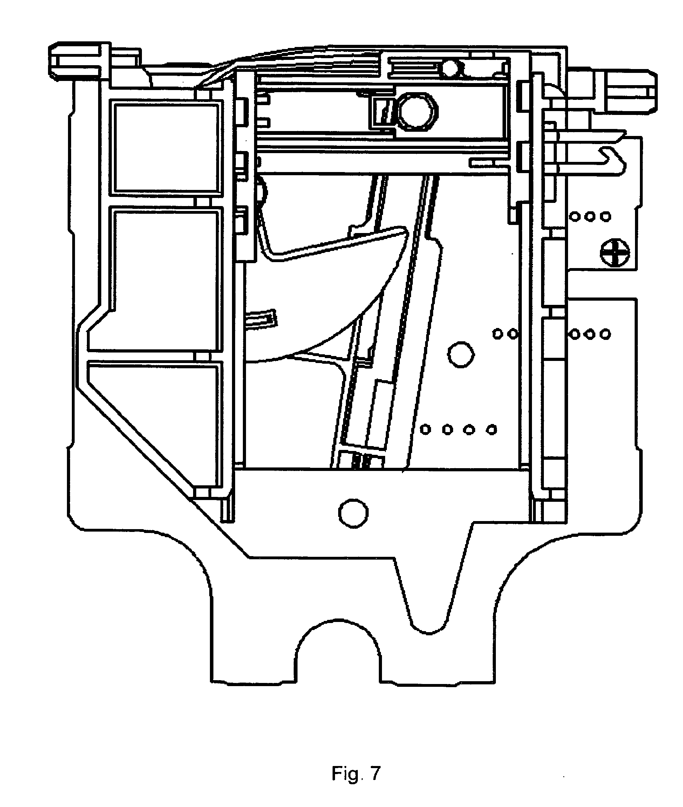

In den Fig. 6 und 7 ist zusätzlich ein Schaltgassenwechsel ausgehend von der Schaltposition D gezeigt (vergleiche Fig. 5b). Die Querbewegung führt über den Schieber 13 mit seiner Hülse zum Verschwenken des drehbar gelagerten Tipphebels 30. In der neuen Schaltgasse können dann die Tippbewegungen M+ und M- ausgeführt werden, die erneut zu einer Längsbewegung des Längsschiebers mit einer entsprechenden Übertragung auf den Verlängerungsarm des Rotors führen.

Folgende weitere Vorteile ergeben sich aus dieser Vorrichtung:
- •: Durch eine Verschiebung des Drehpunktes des Tipphebels 30 lässt sich die Übersetzung der Winkel auf Wunsch einstellen. So kann der vom Wählhebel 1 zurückgelegte Weg von einem kleinen Winkel in einen großen Winkel übersetzt werden oder umgekehrt.
- •: Diese Vorrichtung ist für jede Art von Automatik-Getriebe ausgelegt, d. h. die Positionserkennung kann für jedes Layout wie H-, X-, T-Layout usw. realisiert werden.
- •: Das vorliegende Wählhebelmodul ist ebenso platzsparend wie das Vorgängermodell gemäß DE 10 2006 021 078 B, obwohl eine zusätzliche Sicherheitsfunktion realisiert wurde.

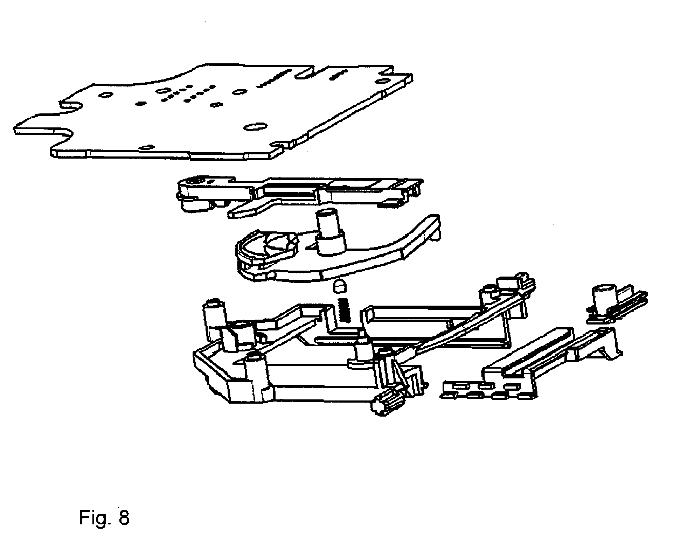

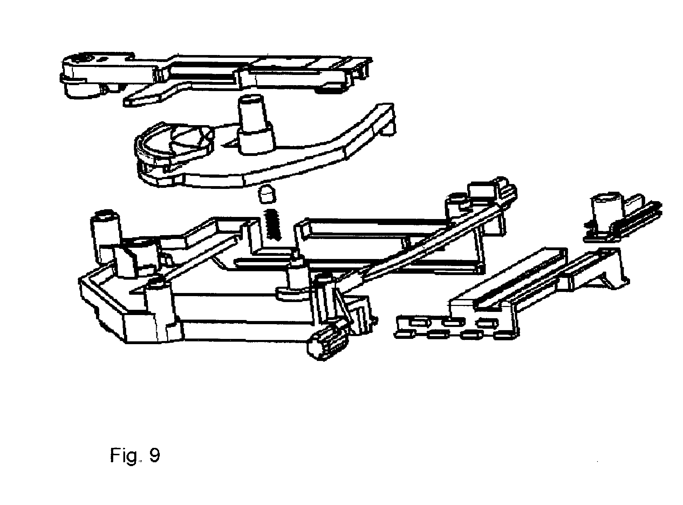

Die Figuren 8 und 9 zeigen eine mögliche Verbesserung des Wählhebelmoduls, die nicht zwingend erforderlich, jedoch unter bestimmten Umständen bevorzugt ist. Bei Erschütterungen kann sich der Rotor von der Leiterplatte weg bewegen. Auch durch Verschleiß im Drehlager kann sich der Abstand zwischen Rotor und Leiterplatte verändern. Diese mechanischen Störungen werden durch ein Federsystem gemäß den Fig. 8 und 9 ausgeglichen. Das Federsystem besteht aus einer Druckfeder mit einem Führungselement und aus einer Aufnahme mittels eines Domes an der Rotorachse im Lager. Die Druckfeder wird vorgespannt durch die Aufnahme mittels des Domes und über das Führungselement im Rotor 9. Der Rotor 9 besitzt nun eine geschlossene Achsaufnahme und wird mit Hilfe des Federsystems immer konstant gegen die Leiterplatte 5 gedrückt. Es ist zwar nicht zwingend notwendig, das Federsystem in das Wählhebelmodul zu integrieren; jedoch ergeben sich folgende Vorteile aus dem Einsatz der weiteren Feder:
- -: Der Rotor 9 kann bei Erschütterungen nicht mehr von der Leiterplatte 5 wegbe- wegt werden. Dadurch werden die Schaltpositionen immer genau detektiert.
- -: Das detektierte Signal kann bei Erschütterungen nicht mehr intermittierend abreißen. Der Rotor 9 kann nicht mehr entlang der Schnittachse der Leiterplatte 5 verrutschen, um anschließend seine ursprüngliche Stellung einzunehmen. Das Signal ist konstant.
- -: Das Erschütterungsproblem kann durch einen Verschleiss des Rotors 9 verstärkt wer- den. In diesem Fall erhält der Rotor 9 mehr Spiel und kann sich leichter entlang der Schnittachse der Leiterplatte 5 verschieben. Der Abstand für die Signalerkennung könnte schwanken. Mittels der vorgespannten Feder 31 wird auch dieser Verschleiß ausgeglichen.

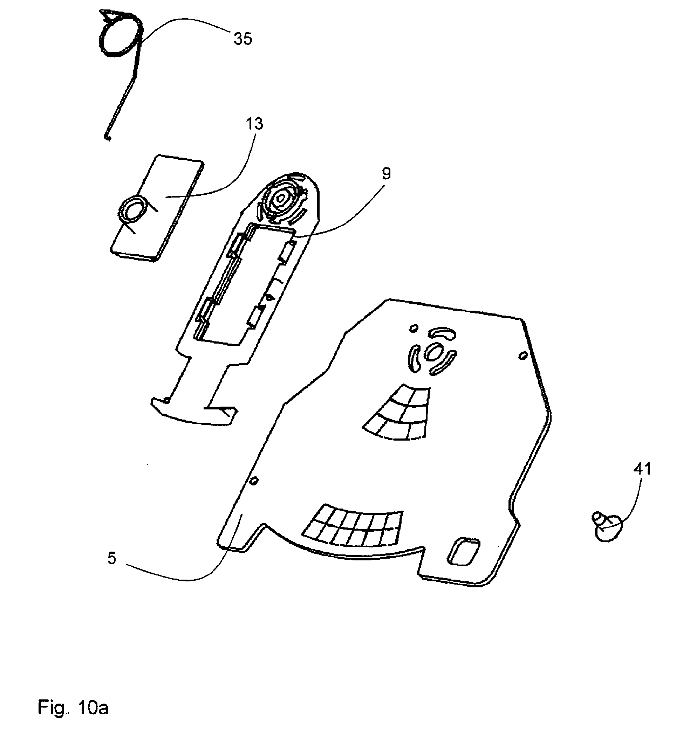

In den Figuren 10 und 11 ist ein Beispeil einer nicht erfindungsgemäßen Sensorvorrichtung, welche Bestandteil eines Wählhebel moduls ist, dargestellt. Die Explosionszeichnung in den Figuren 10a (Aufsicht auf die Sensorseite der Leiterplatte) und Fig. 10b (Sicht auf die Unterseite der Leiterplatte) lässt erkennen, dass für diesen Sensor eine geringe Zahl von Bauteilen ausreicht. Die Baugruppe besteht aus einer Schenkelfeder 35, einem Schieber 13, einem Rotor 9, einer Leiterplatte 5 und optional aus einer Angstschraube 41. Die Leiterplatte 5 trägt bogenförmig angeordnete Sensorspulen in redundanter Ausführung. Die Spulen dienen einerseits zum Detektieren der Rotationsbewegung für die Schaltstellungen P, R, N, D und zum anderen zum Detektieren des Gassenwechsels. Oberhalb der Spulen befindet sich, wie insbesondere aus Fig 12 a zu erkennen ist, der Rotor 9 mit einem integrierten Schieber 13. Der Rotor 9 wird von einer vorgespannten Schenkelfeder 35 gehalten und kann so im Störungsfall aus dem Aktionsbereich herausgefahren werden. Mit Hilfe der Schnapphaken 42, vgl. Fig. 11c, wird der Rotor 9 im Drehlager gehalten. Generell wird der Rotor 9 auf der

Leiterplatte 5 lediglich eingeschnappt. Die Angstschraube 41 ist nicht unabdingbar; sie kann optional zusätzlich zur Befestigung verwendet werden.

Die Besonderheit der Rotorlagerung besteht zunächst aus den drei Haken in der Nähe des Drehlagers, die als bewegliche Steckverbindung die Leiterplatte 5 durchgreifen. Das entgegensetzte Ende des Rotors 9 umschließt die Leiterplatte 5 an einem bogenförmigen Rand. In diesem Bereich der Leiterplatte 5 befinden sich (nicht dargestellte) Gleitbahnen, die bewirken, dass der Rotor 9 an der Leiterplatte 5 geführt wird. Auch auf der Rückseite der Leiterplatte 5 befinden sich Gleitbahnen, um ein Gleiten des Rotors 9 zu unterstützen. Somit ist der Rotor 9 direkt in Kontakt mit der Leiterplatte 5 und wird auf dieser gleichzeitig geführt (Fig. 11a, 11b und 11c). Damit weist das Bedämpfungselement des Rotors 9 immer einen konstanten Abstand zu den Spulen der Leiterplatte 5 auf, sodass eine der wichtigsten Voraussetzungen dieser Sensortechnik erfüllt ist. Ein Verziehen des Rotors 9 durch Temperatureinfluss führt nicht mehr zu einem Abheben von der Leiterplatte. Auch fertigungsbedingte Toleranzen bzgl. der Durchbiegung der Leiterplatte 5 wirken sich nicht mehr auf den Abstand aus. Durch die beidseitige Führung des Rotors 9 auf der Leiterplatte 5 entsteht eine Zwangsführung.

Ein Beispiel einer erfindungsgemäßen Sensorvorrichtung ist in den Fig. 12 und 13 dargestellt. In diesem Fall ist eine separate Rotorführung 39 anstelle des Umgreifens der Leiterplatte 5 vorgesehen. Die Rotorführung 39 wird gemäß Fig. 13a auf der Leiterplatte 5 befestigt. Als Befestigungsvorrichtung ist gemäß Fig. 13b beispielsweise eine Verschraubung auf der Rückseite vorgesehen, es ist jedoch auch eine Steckverbindung oder eine Hakenverbindung möglich. In Fig. 12a und Fig. 13a ist zu erkennen, wie mit Hilfe der Rotorführung 39 der Rotor 9 und somit dessen Bedämpfungselement einen gleichbleibenden Abstand zu den Spulen der Leiterplatte 5 einhalten. Der Abstand zwischen den Spulen und den Bedämpfungselementen ändert sich auch dann nicht, wenn sich der Rotor z.B. auf Grund von Temperatureinflüssen verzieht.

### Bezugszeichenliste

- 1: Gangwahlhebel
- 3: Winkelsensor
- 5: Leiterplatte
- 7: weiterer Sensor (Winkelsensor)
- 9: Rotor
- 11: Schienen
- 13: Schieber
- 15: Drehlager
- 16: Gleitbahn
- 19: Bügel
- 21: Kugelfortsatz
- 29: Feder
- 30: Tipphebel
- 35: Schenkelfeder
- 39: Rotorführung
- 41: Angstschraube
- 42: Schnapphaken

## Patentansprüche

1. Sensorvorrichtung mit einem Winkelsensor (3), der auf einer Leiterplatte (5) angeordnet ist, mit einem Rotor (9) zur Betätigung des Winkelsensors (3), und mit einem Schieber (13), der an dem Rotor (9) radial in dessen Rotationsebene als während einer Rotationsbewegung längenveränderlicher Hebelarm (11 , 13, 15) geführt ist, **dadurch gekennzeichnet, dass** der Rotor (9) gabelförmig eine Rotorführung (39) umgreift, die auf der Leiterplatte (5) montiert ist.

2. Sensorvorrichtung nach Anspruch 1, **gekennzeichnet durch** eine tangential wirkende Schenkelfeder (35) am Drehlager (15) des Rotors (9).

## Claims

1. Sensor device having an angle sensor (3) which is arranged on a printed circuit board (5), having a rotor (9) for actuating the angle sensor (3), and having a slide (13) which is radially guided on the rotor (9) in the plane of rotation of the latter as a lever arm (11, 13, 15) whose length can be changed during a rotational movement, **characterized in that** the rotor (9) engages around a rotor guide (39) mounted on the printed circuit board (5) in a fork-like manner.

2. Sensor device according to Claim 1, **characterized by** a tangentially acting leg spring (35) on the pivot bearing (15) of the rotor (9).

## Revendications

1. Dispositif capteur comprenant un capteur d'angle (3), qui est disposé sur une carte à circuits imprimés (5), comprenant un rotor (9) pour l'actionnement du capteur angulaire (3) et un coulisseau (13) qui est guidé sur le rotor (9) radialement dans son plan de rotation sous forme de bras de levier (11, 13, 15) de longueur variable pendant un mouvement de rotation, **caractérisé en ce que** le rotor (9) vient en prise comme une fourche autour d'un guide de rotor (39) qui est monté sur la carte à circuits imprimés (5).

2. Dispositif capteur selon la revendication 1, **caractérisé par** un ressort à branche (35) agissant tangentiellement sur le palier rotatif (15) du rotor (9).
